# EUROPÄISCHE PATENTSCHRIFT

(11) **EP 2 356 439 B1**
(45) Veröffentlichungstag und Bekanntmachung des Hinweises auf die Patenterteilung: **16.12.2015**
(21) Anmeldenummer: 09748239.2
(22) Anmeldetag: 22.10.2009
(51) Int. Cl.: G01N 27/90

(54) **PRÜFVERFAHREN UND PRÜFVORRICHTUNG ZUR PRÜFUNG VON LANGGESTRECKTEN GEGENSTÄNDEN MITTELS EINER SPULE**
TEST METHOD AND TEST DEVICE FOR TESTING ELONGATE OBJECTS BY MEANS OF A COIL
PROCÉDÉ ET DISPOSITIF D'INSPECTION DES OBJETS ALLONGÉS PAR UNE BOBINE

(30) Priorität: 23.10.2008 DE 102008053778
(43) Veröffentlichungstag der Anmeldung: 17.08.2011
(73) Patentinhaber: Institut Dr. Foerster GmbH & Co. KG, 72766 Reutlingen (DE)
(72) Erfinder: STRITZKE, Günther, 72810 Gomaringen (DE); KOCH, Stefan, 72406 Bisingen (DE)
(74) Vertreter: Patentanwälte Ruff, Wilhelm, Beier, Dauster & Partner mbB
(86) Internationale Anmeldenummer: PCT/EP2009/007564
(87) Internationale Veröffentlichungsnummer: WO 2010/046106

(56) Entgegenhaltungen:
- EP-A1- 1 319 955
- EP-A2- 0 231 865
- GB-A- 2 014 317
- JP-A- H03 150 461

## Beschreibung

### HINTERGRUND DER ERFINDUNG

### Gebiet der Erfindung

Die Erfindung bezieht sich auf ein Prüfverfahren zur Prüfung von langgestreckten Gegenständen, bei dem ein langgestreckter Gegenstand entlang einer Durchlaufrichtung durch eine Durchlaufspulenanordnung mit mindestens einer Durchlaufspule hindurch bewegt wird, sowie auf eine Prüfvorrichtung zum Prüfen von langgestreckten Gegenständen im Durchlaufverfahren mit einer Durchlaufspulenanordnung mit mindestens eine Durchlaufspule zum Hindurchführen eines langgestreckten Gegenstandes entlang einer Durchlaufrichtung.

### Beschreibung des verwandten Standes der Technik

Langgestreckte Gegenstände, wie beispielsweise metallische Drähte, Stäbe, Stangen oder Rohre können als Ausgangsmaterialien für hochwertige Endprodukte dienen und unterliegen häufig höchsten Qualitätsanforderungen. Die Prüfung auf Materialfehler, beispielsweise auf oberflächennahe Risse, Lunker oder andere Materialinhomogenitäten, bildet einen wichtigen Teil der. Qualitätskontrolle dieser Produkte. Dabei wird in der Regel eine möglichst lückenlose Prüfung der Materialoberfläche mit hoher Auflösung angestrebt, die nach Möglichkeit am Herstellungsort im Takt und mit der Geschwindigkeit des Herstellungsprozesses durchführbar sein soll. Derartige Prüfungen werden heutzutage vielfach unter Nutzung magnetischer Methoden, insbesondere der Wirbelstromtechnik, im Durchlaufverfahren durchgeführt. Bei einer Prüfung im Durchlaufverfahren wird ein zu prüfender Gegenstand (Prüfgegenstand) mit relativ hoher Durchlaufgeschwindigkeit durch einen mit entsprechender Sensorik ausgestatteten Prüfabschnitt einer Prüfvorrichtung bewegt und dabei geprüft.

Eine Klasse von Prüfvorrichtungen für das Durchlaufverfahren hat einen um den hindurch laufenden Gegenstand rotierenden Prüfkopf mit daran angebrachten Prüfsonden (Tastsonden), die bei geeigneter Anpassung von Rotationsgeschwindigkeit und Durchlaufgeschwindigkeit eine lückenlose Prüfung der Gegenstände mit hoher Ortsauflösung ermöglichen. Bei einer anderen Klasse von Durchlaufverfahren werden den Prüfgegenstand umfassende Durchlaufspulen eingesetzt, durch die der zu prüfende Gegenstand hindurchgeführt wird.

Bei der zerstörungsfreien Werkstoffprüfung im Wirbelstromverfahren wird durch eine Erregerspule in dem zu prüfenden Material ein elektrischer Wechselstrom (Wirbelstrom) geeigneter Richtung, Größe und Frequenz erzeugt, und die entstehenden Unregelmäßigkeiten des Wirbelstroms werden mit Hilfe von Sensoren, z.B. einer Spulenanordnung, erfasst und ausgewertet. Bei der Wirbelstromprüfung wird der Effekt ausgenutzt, dass die meisten Verunreinigungen oder Defekte in einem elektrisch leitfähigen Material eine andere elektrische Leitfähigkeit und/oder eine andere Permeabilität als das Prüfmaterial selbst haben. Das auszuwertende Messsignal ist vor allem von der Leitfähigkeit und Permeabilität des Prüflingsmaterials und vom Abstand zwischen dem Wirbelstromsensor und der Materialoberfläche bestimmt, wobei mit zunehmendem Abstand des Sensors von der Materialoberfläche die absolute Stärke des Fehlersignals und auch das Verhältnis zwischen Nutzsignal und Störsignalen (Nutz/Stör-Verhältnis, N/S-Verhältnis) abnimmt.

Um den starken Einfluss des Abstandes zwischen Sensor und Materialoberfläche auf das Messsignal auszugleichen, sind für Prüfvorrichtungen mit Rotierköpfen verschiedene Systeme der Abstandskompensation vorgeschlagen worden (wie z.B. DE 40 03 330 A1). Dem Einfluss des Abstandes bei den mit Abstand vom Prüfgut angeordneten Tastspulen entspricht bei den Verfahren mit Durchlaufspulen der sogenannte Füllfaktor der Durchlaufspule. Unter dem Füllfaktor bzw. Füllgrad versteht man allgemein das Verhältnis vom Prüfmaterialquerschnitt zum wirksamen Spulenquerschnitt. Generell wird beobachtet, dass die Fehlersignalamplitude abnimmt, je geringer der Füllfaktor ist. Daher wird eine möglichst weitgehende Ausfüllung des Spulenquerschnitts der Durchlaufspule durch den Prüfgegenstand angestrebt, so dass die inneren Bereiche der Durchlaufspulen relativ nahe an der zu prüfenden Oberfläche verlaufen. Besonders bei Prüfungen mit relativ hohem Füllfaktor der Durchlaufspule werden jedoch häufig relativ hohe Störpegel beobachtet, die die Messgenauigkeit beeinträchtigen. Es wurde beobachtet, dass dieser Effekt besonders bei relativ dünnen Prüfmaterialien, wie beispielsweise Drähten oder dünnen Stäben, auftreten kann.

Die europäische Patentanmeldung EP 0 231 865 A2 beschreibt eine Anordnung für die zerstörungsfreie Prüfung von zylinderförmigen Werkstücken, die eine Messeinrichtung umfasst, die sich zumindest abschnittsweise entlang der senkrecht zur Längsachse des Werkstücks verlaufenden Umfangsfläche erstreckt. Um einen stets gleichbleibenden Abstand zwischen dem Werkstück und der Messeinrichtung zu gewährleisten, bildet diese mit auf dem Werkstück sich abstützenden Gleitelementen eine Einheit, die ihrerseits schwimmend an einer in Bezug auf das Werkstück ortsfest angeordneten Halterung gelagert ist.

Die europäische Patentanmeldung EP 1 319 955 A1 beschreibt ein Verfahren und eine Vorrichtung zur Qualitätsprüfung verseilter Drähte zur Herstellung von Spulen. Zum Ermitteln der Qualität eines Leiters mit mehreren Drähten aus einer Aluminiummehrschichtlegierung wird ein magnetisches Wechselfeld und/oder eine Wechselspannung an diesen angelegt. Die so erzeugten Wirbelströme sind ein Maß für die Qualität der Oxidschicht auf den Drähten und zeigen somit an, wie gut der Leiter insbesondere zum Einsatz in einer Starkstromspule geeignet ist. Bei einem Ausführungsbeispiel ist eine Quellspule im Form einer Durchlaufspule vorgesehen, die koaxial mit dem Leiter angeordnet ist.

### ZUSAMMENFASSUNG DER ERFINDUNG

Es ist eine Aufgabe der Erfindung, ein Prüfverfahren zum Prüfen von langgestreckten Gegenständen mit Hilfe von Durchlaufspulen bereitzustellen, das eine Prüfung mit hohem Fehlersignalpegel und gleichzeitig geringem Störpegel ermöglicht, insbesondere auch bei relativ dünnen Prüfgegenständen wie Drähten oder dünnen Stäben. Es ist eine weitere Aufgabe, eine zur Durchführung des Verfahrens geeignete Prüfvorrichtung bereitzustellen.

Zur Lösung dieser Aufgaben stellt die Erfindung ein Prüfverfahren mit den Merkmalen von Anspruch 1 sowie eine Prüfvorrichtung mit den Merkmalen von Anspruch 6 bereit. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Das erfindungsgemäße Prüfverfahren der eingangs erwähnten Art zeichnet sich dadurch aus, dass die Durchlaufspulenanordnung quer zur Durchlaufrichtung des Gegenstandes beweglich gehalten und an dem durchlaufenden Gegenstand derart geführt wird, dass die Durchlaufspulenanordnung quer zur Durchlaufrichtung des Gegenstandes verlaufenden Transversalbewegungen des Gegenstandes folgen kann. Dadurch wird es möglich, dass die Durchlaufspule auch bei Auftreten von Quer- bzw. Transversalbewegungen eines durchlaufenden Gegenstandes immer symmetrisch um den Gegenstand herum angeordnet bleibt. Es tritt also eine kontinuierliche Selbstzentrierung der Durchlaufspule bzw. der Durchlaufspulenanordnung am durchlaufenden Gegenstand ein, so dass sich an keiner Stelle des Umfanges des durchlaufenden Gegenstandes der radiale Abstand zur zugewandten Innenseite der Durchlaufspule während der Prüfung wesentlich ändert. Dadurch kann der Störpegel bzw. das Nutzsignal-/Störsignal-Verhältnis unabhängig vom Füllfaktor der Durchlaufspule sehr gering gehalten werden, denn die auf Abstandsschwankungen beruhenden Störeinflüsse werden durch die konstruktiv vorgesehene Selbstzentrierung der Durchlaufspulenanordnung am durchlaufenden Gegenstand weitestgehend eliminiert.

Eine zur Durchführung des Verfahrens geeignete Prüfvorrichtung zur Prüfung von langgestreckten Gegenständen im Durchlaufverfahren mit einer mindestens eine Durchlaufspule aufweisenden Durchlaufspulenanordnung zum Hindurchführen eines langgestreckten Gegenstandes entlang einer Durchlaufrichtung hat eine Halteeinrichtung zum Halten der Durchlaufspulenanordnung in einer Prüfposition, wobei die Halteeinrichtung Bewegungen der Durchlaufspulenanordnung quer zur Durchlaufrichtung erlaubt, sowie eine Führungseinrichtung zum Einstellen der Lage der Prüfposition der Durchlaufspulenanordnung in Abhängigkeit von der Lage des durch die Durchlaufspulenanordnung laufenden Gegenstandes. Dabei ist die Prüfposition der Durchlaufspule der Durchlaufspulenanordnung vorteilhaferweise so, dass die Durchlaufspule bezüglich des Querschnitts des durchlaufenden Gegenstandes zentriert ist. Bei einem Prüfgegenstand mit kreisrundem Querschnitt kann beispielsweise eine im Querschnitt runde Durchlaufspule verwendet werden, deren zentrale Spulenachse unabhängig von Querbewegungen des durchlaufenden Gegenstandes immer im Wesentlichen koaxial mit der zentralen Längsachse des durchlaufenden Gegenstandes ist.

Ferromagnetische Prüfmaterialien, beispielsweise Stahlrohre, Stahldrähte oder Stahlstäbe, zeigen häufig Permeabilitätsvariationen, die keine gesuchten Fehler darstellen, die Prüfung aber empfindlich stören oder sogar unmöglich machen können, da sie große Störsignale erzeugen können. Diese Störsignale können durch eine magnetische Sättigung des Prüfmateriales am Ort der Durchlaufspule reduziert werden. Hierzu ist bei der beanspruchten Erfindung eine mit der Durchlaufspulenanordnung bewegliche bzw. lagefixiert zur Durchlaufspulenanordnung angeordnete Magnetisierungseinrichtung zum Magnetisieren des durch die Durchlaufspulenanordnung hindurch laufenden Gegenstandes vorgesehen.

Die Magnetisierungseinrichtung hat vorzugsweise in Durchlaufrichtung vor und in Durchlaufrichtung hinter einer Durchlaufspule der Durchlaufspulenanordnung Magnetisierungsmittel, insbesondere in Form von Permanentmagneten, deren Dimensionierung dem Querschnitt des zu prüfenden Gegenstandes angepasst sein sollte. Die Magnetisierungsmittel können so ausgelegt sein, dass sie im Prüflingsmaterial magnetische Flusslinien erzeugen, die im Bereich der Durchlaufspule im Wesentlichen parallel zur Längsrichtung des durchlaufenden Gegenstandes verlaufen. Anstelle von Permanentmagneten können auch mit Gleichstrom gespeiste Spulen genutzt werden, die ein magnetisches Gleichfeld im Wesentlichen parallel zur Materiallängsachse erzeugen. Hierdurch ist eine Magnetisierung mit zeitlich variabler Magnetisierunsgsfeldstärke möglich.

Wenn das Material des zu prüfenden Gegenstandes für die Prüfung aufmagnetisiert wurde, bleibt in der Regel das Prüflingsmaterial mindestens teilweise magnetisiert, nachdem der Prüfabschnitt der Prüfvorrichtung durchlaufen ist. Da dies in der Regel nicht gewünscht ist, ist bei manchen Ausführungsformen eine in Durchlaufrichtung hinter der Durchlaufspulenanordnung angeordnete Entmagnetisierungseinrichtung vorgesehen. Diese kann räumlich und konstruktiv getrennt von der Durchlaufspulenanordnung vorgesehen sein, bewegt sich jedoch bei bevorzugten Ausführungsformen mit der dem Prüfgegenstand folgenden Durchlaufspulenanordnung mit. Dies kann z.B. dadurch erreicht, dass die Halteeinrichtung zum Halten der Durchlaufspulenanordnung auch Haltestrukturen zur Aufnahme einer Entmagnetisierungseinrichtung aufweist. Die Haltestrukturen können beispielsweise so gestaltet sein, dass sich die Entmagnetisierungseinrichtung bei Bedarf leicht an der Halteeinrichtung befestigen bzw. von dieser lösen lässt, wenn keine Entmagnetisierung erforderlich ist.

Durchlaufspulen können auch für andere, nicht-kreisrunde Querschnitte genutzt werden, beispielsweise für einen Viereckquerschnitt, einen Dreieckquerschnitt, einen elliptischen bzw. ovalen Querschnitt oder einen eiförmigen Querschnitt. Die Querschnitte der Durchlaufspulen sollten dann eine entsprechend angepasste Querschnittsform haben.

Bei manchen Verfahrensvarianten wird die Durchlaufspulenanordnung unmittelbar am durchlaufenden Gegenstand geführt. Dabei kann ein ständiger Berührungskontakt zwischen dem durchlaufenden Gegenstand und einem oder mehreren Führungselementen der Führungseinrichtung bestehen, die der Durchlaufspulenanordnung zugeordnet und mit dieser beweglich sind. Es kann sich beispielsweise um einen gleitenden Berührungskontakt oder um einen Abrollkontakt handeln. Auch eine Kombination aus Abgleiten und Abrollen ist möglich.

Bei manchen Ausführungsformen weist die Durchlaufspulenanordnung mindestens eine Führungshülse zum Hindurchführen des zu prüfenden Gegenstandes auf, wobei ein wirksamer Innenquerschnitt der Führungshülse zum im Wesentlichen spielfreien Abgleiten auf dem Prüfgegenstand ausgelegt ist. Die Durchlaufspule kann die Führungshülse umschließen, sie kann zwischen den axialen Enden der Führungshülse z.B. etwa mittig zwischen den Enden angeordnet sein. Eine Mittelachse der Führungshülse kann koaxial zur Spulenachse der Durchlaufspule angeordnet sein, so dass bei Zentrierung des durchlaufenden Gegenstandes in der Führungshülse der durchlaufende Gegenstand auch in Bezug auf die Durchlaufspule zentriert ist.

Alternativ oder zusätzlich ist es auch möglich, dass die Durchlaufspulenanordnung mit mindestens einer Rollenanordnung verbunden ist, die mindestens eine Führungsrolle zum Abrollen an dem durch die Durchlaufspulenanordnung bewegten Gegenstand aufweist. Hierdurch ist eine besonders schonende Führung mit Berührungskontakt zum Gegenstand möglich. Vorzugsweise hat die Rollenanordnung mindestens eine Führungsrolle in Durchlaufrichtung vor der Durchlaufspulenanordnung und mindestens eine Führungsrolle in Durchlaufrichtung hinter der Durchlaufspulenanordnung, so dass die Durchlaufspulenanordnung zwischen Führungsrollen der Rollenanordnung angeordnet ist. Dadurch ist eine sichere Zentrierung bei minimaler Belastung des zu prüfenden Gegenstandes möglich. Eine Führungsrolle kann an ihrem Umfang eine konkave Führungskontur haben, so dass sich die Führungsrolle auf dem durchlaufenden Gegenstand selbst zentrieren kann, womit auch die Zentrierung der Durchlaufspule gegenüber dem durchlaufenden Prüfgegenstand dauerhaft sichergestellt ist. Wenn die konkave Führungskontur im Wesentlichen V-förmig ist, kann dieselbe Führungsrolle für Prüfgegenstände unterschiedlicher Durchmesser verwendet werden, wobei über einen gewissen Durchmesserbereich in jedem Fall eine Zentrierung erfolgt.

Auch eine berührungslose Führung der Durchlaufspulenanordnung am durchlaufenden Gegenstand ist möglich und kann beispielsweise vorgesehen sein, wenn Gegenstände mit besonders berührungsempfindlichen Oberflächen zu prüfen sind. Bei einer Verfahrensvariante wird eine aktuelle Position des durchlaufenden Gegenstandes in Durchlaufrichtung vor der Durchlaufspulenanordnung, d.h. an der Eintrittsseite der Durchlaufspulenanordnung, mit Hilfe eines Positionssensors zur Erzeugung von Positionssignalen erfasst und ein Verlagerungsantrieb bzw. Zentrierantrieb zur Verlagerung der Durchlaufspulenanordnung quer zur Durchlaufrichtung des Gegenstand wird auf Basis der Positionssignale so gesteuert, dass die Durchlaufspule mit Hilfe des Verlagerungsantriebs dynamisch, d.h. zeitnah zur Erfassung möglicher Querbewegungen der Gegenstandes, in eine solche Prüfposition verlagert wird, bei der der durchlaufende Gegenstand im Wesentlichen zentrisch durch die Durchlaufspulenanordnung verläuft. Für die Erfassung der Achslage des Gegenstandes können z.B. optische oder magnetische Positionssensoren verwendet werden.

Die Halteeinrichtung zum Halten der Durchlaufspulenanordnung soll die Durchlaufspulenanordnung in einer Prüfposition halten und dabei eine begrenzte Bewegung der Durchlaufspulenanordnung quer zur Durchlaufrichtung des Gegenstandes ermöglichen. Dies ist auf unterschiedliche Weise möglich. Bei manchen Ausführungsformen hat die Halteeinrichtung einen Spulenhalter zum Befestigen der Durchlaufspulenanordnung und ein Basiselement zur Befestigung an einem fest mit der Maschinenbasis der Prüfvorrichtung verbundenen Bauteil, wobei der Spulenhalter mit dem Basiselement über eine bewegliche Verbindungseinrichtung derart verbunden ist, dass der Spulenhalter gegenüber dem Basiselement mindestens in zwei quer zur Durchlaufsrichtung verlaufenden Raumrichtungen beweglich ist. Dadurch kann die Durchlaufspulenanordnung eventuellen Querbewegungen des zu prüfenden Gegenstandes folgen, bleibt jedoch in Durchlaufrichtung im Wesentlichen festgelegt.

Bei einer Variante umfasst die Verbindungseinrichtung mindestens zwei Schwenkgelenke mit senkrecht zueinander ausgerichteten Schwenkachsen, so dass eine Relativbewegung des Spulenhalters gegenüber dem Basiselement in mindestens zwei senkrecht zueinander verlaufenden Raumrichtungen möglich ist.

Bei manchen Ausführungsformen sind zwei Paare von Schwenkgelenken mit jeweils senkrecht zueinander ausgerichteten Schwenkachsen vorgesehen. Wenn die Durchlaufspulenanordnung gegenüber der Maschinenbasis mehr als zwei Bewegungsfreiheitsgrade für Schwenkbewegungen hat, so kann die Durchlaufspule nicht nur dem durchlaufenden Gegenstand bei Querbewegungen folgen, sondern es ist auch eine Ausrichtung der Durchlaufspulenanordnung am Gegenstand möglich, wodurch kippungsbedingte Messfehler minimiert werden und der Entstehung von Kippmomenten oder anderen zu ungleichmäßigen Belastungen führenden Zuständen der Durchlaufspulenanordnung entgegengewirkt wird.

Es ist auch möglich, dass die Verbindungseinrichtung mindestens ein biegsames Verbindungselement aufweist, welches den Spulenhalter mit dem Basiselement verbindet. Bei einer Ausführungsform ist das Basiselement über einen Verbindungsdraht mit dem Spulenhalter verbunden, der dadurch gegenüber dem Basiselement beweglich ist, ohne dem Prüfgegenstand in Durchlaufrichtung folgen zu können.

Als weitere Alternative ist eine schwimmende Lagerung des Spulenhalters gegenüber dem Basiselement möglich, die beispielsweise zwei oder mehr senkrecht zueinander ausgerichtete Linearführungen aufweisen kann.

Es ist auch möglich, eine elastisch nachgiebige Federanordnung zu verwenden, die den Spulenhalter mit dem Basiselement verbindet. Die Federanordnung kann eine oder mehrere Federn aufweisen und so ausgebildet sein, dass der Spulenhalter in einer Sollposition gehalten wird, die einem idealen Durchlauf entspricht, und dass gewisse Auslenkungen gegenüber dieser Sollposition durch die Elastizität der Federanordnung möglich sind. Die Verbindungseinrichtung kann durch die Federanordnung gebildet sein oder eine solche neben anderen Komponenten, z.B. einem Verbindungsdraht, enthalten.

Ausführungsbeispiele der Erfindung sind in den Zeichnungen dargestellt und werden im Folgenden näher erläutert.

### KURZBESCHREIBUNG DER ZEICHNUNGEN

- Fig. 1: zeigt eine schematische Seitenansicht wesentlicher Komponenten einer ersten Ausführungsform einer Prüfvorrichtung, bei der ein Spulenhalter für eine Durchlaufspulenanordnung über einen biegsamen Verbindungsdraht beweglich mit einem an der Maschinenbasis der Prüfvorrichtung befestigten Basiselement verbunden ist;
- Fig. 2: zeigt eine perspektivische Draufsicht auf die Ausführungsform von Fig. 1;
- Fig. 3: zeigt einen Längsschnitt durch eine Durchlaufspulenanordnung, die nicht gemäß der beanspruchten Erfindung ausgestaltet ist;
- Fig. 4: zeigt einen Längsschnitt durch eine Ausführungsform einer Durchlaufspulenanordnung;
- Fig. 5: zeigt einen Längsschnitt durch eine Ausführungsform einer Durchlaufspulenanordnung;
- Fig. 6: zeigt einen Längsschnitt durch eine Ausführungsform einer Durchlaufspulenanordnung;
- Fig. 7: zeigt in 7A eine schrägperspektivische Ansicht einer Durchlaufspulenanordnung, bei der an der Einlaufseite und der Auslaufseite Führungsrollen zum Abrollen auf einem durchgeführten Gegenstand befestigt sind, sowie einen optional anbringbaren Feldbügel, und in 7B eine Axialansicht einer auf einem Prüfgegenstand abrollenden Führungsrolle; und
- Fig. 8: zeigt eine schrägperspektivische Darstellung einer Halteeinrichtung mit mehreren Schwenklagern, wobei in der Halteeinrichtung eine Durchlaufspulenanordnung mit integrierter Magnetisierungseinrichtung zur Magnetisierung von ferromagnetischem Prüfgut und hinter der Durchlaufspulenanordnung eine mit der Durchlaufspulenanordnung bewegliche Entmagnetisierungseinrichtung angeordnet sind.

### DETALLIERTE BESCHREIBUNG DER BEVORZUGTEN AUSFÜHRUNGSFORMEN

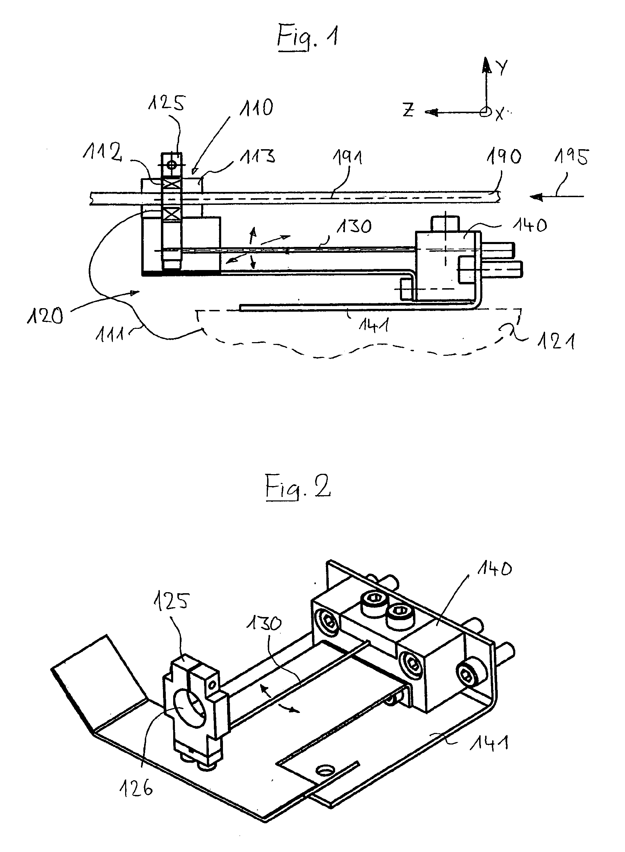

Die teilweise geschnittene Seitenansicht in Fig. 1 zeigt wesentliche Komponenten einer Ausführungsform einer Prüfvorrichtung zur Wirbelstromprüfung von langgestreckten Gegenständen (Prüfgegenstände) im Durchlaufverfahren mittels Durchlaufspulen. Die gezeigten Komponenten der Prüfvorrichtung können unmittelbar hinter dem Austritt einer Fertigungsmaschine für langgestreckte Gegenstände, beispielsweise einer Drahtziehmaschine, angeordnet sein. Der Prüfgegenstand 190, bei dem es sich im Beispielsfall um einen metallischen Draht mit kreisrundem Querschnitt und einem Durchmesser zwischen ca. 0,3 mm und ca. 2 - 3 mm handelt, hat eine zentrische Längsachse 191 und bewegt sich parallel zu dieser Längsachse in einer im Wesentlichen horizontalen Bewegungsrichtung (Pfeil), die in der Zeichnung von rechts nach links verläuft. Stromabwärts der Prüfvorrichtung, also an der Austrittsseite, kann sich beispielsweise eine Aufwickeleinrichtung für den frisch gezogenen und unmittelbar nach dem Ziehen auf Fehler geprüften Draht befinden.

Die Prüfvorrichtung hat eine Durchlaufspulenanordnung 110 mit mindestens einer schematisch dargestellten Durchlaufspule 112, durch die der zu prüfende Gegenstand für die Prüfung in einer der Bewegungsrichtung entsprechenden Durchlaufrichtung 195 hindurch bewegt wird, wobei die Durchlaufspule den Prüfgegenstand bei der Prüfung umfasst. Die umfassende Durchlaufspule 112 ist in an sich bekannter Weise als Sendespule und als Empfängerspule einer Wirbelstrom-Messvorrichtung elektrisch verschaltet. Die Durchlaufspule kann beispielsweise zwei elektrisch in Differenz zueinander geschaltete, in axialem Abstand zueinander angeordnete Messwickel umfassen, die gemäß Patent DE 44 43 464 C2 der Anmelderin elektrisch verschaltet sein können.

Die Durchlaufspulenanordnung wird mit Hilfe einer Halteeinrichtung 120 an einem fest an der Maschinenbasis montierten Bauteil 121 der Prüfvorrichtung befestigt. Bei dem Bauteil kann es sich beispielsweise um einen Teil der Steuereinheit der Prüfvorrichtung handeln, die die elektrischen Komponenten zur Bestromung der Durchlaufspulenanordnung und zur Signalerfassung und Auswertung enthält. Die Durchlaufspulenanordnung kann über ein flexibles Verbindungskabel 111 und Steckkontakte lösbar mit der Steuereinheit verbunden werden.

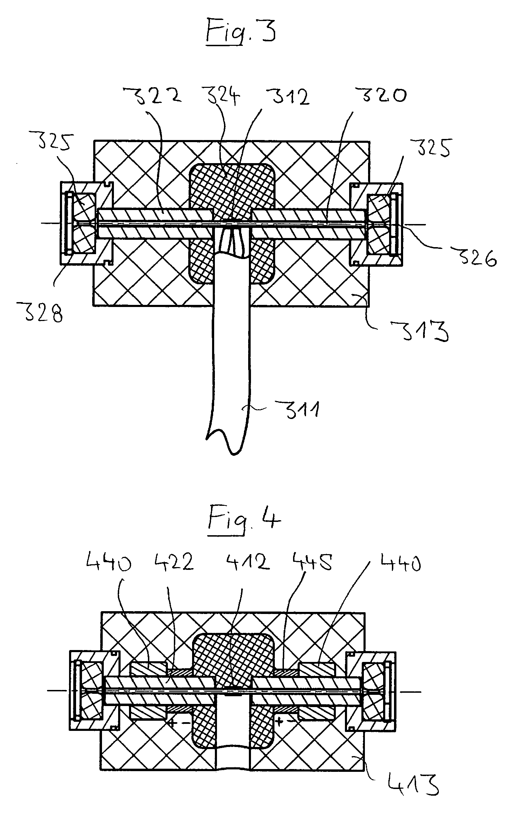

Die Durchlaufspulenanordnung hat im Beispielsfall ein im Wesentlichen zylindrisches Gehäuse 113, in das die Durchlaufspule 112 und weitere Komponenten der Durchlaufspulenanordnung fest integriert sind. Einige Varianten werden im Zusammenhang mit den Fig. 3 bis 5 weiter unten näher erläutert. Die Halteeinrichtung 120 umfasst einen Spulenhalter 125 mit einer begrenzt aufweitbaren, zylindrischen Durchgangsöffnung 126, in die die Durchlaufspulenanordnung axial eingeführt werden kann, um anschließend durch Anziehen von Spannschrauben im Spulenhalter fixiert zu werden. Der Spulenhalter ist über ein einzelnes biegsames Verbindungselement in Form eines Verbindungsdrahts 130 mit einem Basiselement 140 der Halteeinrichtung verbunden, welches eine Basisplatte 141 umfasst, die mit Hilfe von Schrauben auf der Oberseite des Bauteils 121 befestigt werden kann.

Definiert man die Durchlaufrichtung 195 des zu prüfenden Gegenstandes als z-Richtung und die senkrecht zur Durchlaufrichtung orientierten x- und y- Richtungen als Querrichtungen zur Durchlaufrichtung (Transversalrichtungen), so ist ersichtlich, dass durch die flexible Verbindung zwischen dem Basiselement 140 und dem Spulenhalter 125 der Spulenhalter und die darin aufgenommene Durchlaufspulenanordnung in der Lage sind, sich relativ zum Basiselement in allen Querrichtungen, insbesondere sowohl in Horizontalrichtung (x-Richtung) als auch in Vertikalrichtung (y-Richtung), zu bewegen, während eine Bewegung parallel zur Durchlaufrichtung (z-Richtung) bei gestrecktem Verbindungsdraht weitestgehend unterbunden ist.

Die Durchlaufspulenanordnung hat eine Führungshülse zum Durchführen des zu prüfenden Gegenstandes, wobei der Innenquerschnitt der Führungshülse so dimensioniert ist, dass die Führungshülse in Radialrichtung im wesentlichen spielfrei auf dem durch sie hindurchgeführten Prüfgegenstand gleiten kann. Details werden im Zusammenhang mit den Fig. 3 bis 6 noch näher erläutert. Die mit der Führungshülse ausgestattete Führungseinrichtung bewirkt, dass die Längsachse 191 des Drahtes immer zentriert in der Durchlaufspule liegt, also koaxial zur zentrischen Spulenachse. Im Betrieb der Prüfvorrichtung wird der Prüfgegenstand 190 mit einer geeigneten Durchlaufgeschwindigkeit durch die Durchlaufspulenanordnung hindurchgeführt und kann dabei je nach Auslegung der für die Führung des Prüfgegenstandes eingangsseitig und ausgangsseitig vorgesehenen Elemente und den mechanischen und elastischen Eigenschaften des Prüfgegenstandes mehr oder weniger stark ausgeprägte Querbewegungen senkrecht zur Durchlaufrichtung 195 ausführen. Diese Querbewegungen können bei herkömmlichen Durchlaufspulenanordnungen zu erheblichen Störungen der Messung führen, da die Messsignale der Durchlaufspulenanordnung stark vom Abstand zwischen der Materialoberfläche des Prüfgegenstandes und der Innenseite der Durchgangsspule abhängen. Diese Fehler werden bei der gezeigten Ausführungsform dadurch reduziert bzw. vermieden, dass die Durchlaufspule dank der flexiblen Aufhängung den Querbewegungen des Prüfgegenstandes folgen kann, so dass sich die Lage der Durchlaufspule automatisch in Abhängigkeit von der Lage des durch die Durchlaufspule bzw. die Durchlaufspulenanordnung laufenden Gegenstandes selbsttätig einstellt. Da der Prüfgegenstand unabhängig von seiner absoluten Position im Raum immer zentriert durch die Durchlaufspulenanordnung läuft, werden abstandsabhängige Fehlerbeiträge weitestgehend unterdrückt, so dass eine Messung mit sehr geringem abstandsabhängigem Störpegel durchgeführt werden kann.

Anhand der Figuren 3 bis 6 werden nun einige Beispiele für leichte und kompakte Durchlaufspulenanordnungen angegeben, wie sie beispielsweise bei der fertigungsnahen Drahtprüfung für Drahtquerschnitte zwischen ca. 0,3 mm und 2 mm bis 3 mm verwendet werden können. Die Durchlaufspulen der Durchlaufspulenanordnung von Fig. 3 werden durch zwei mit axialem Abstand zueinander angeordnete Messwickel 312 gebildet, die über ein mehradriges Verbindungskabel 311 an die Steuerelektronik der Prüfvorrichtung angeschlossen werden können, um ein Differenzspulenpaar zu bilden. Die Messwickel sitzen etwa mittig auf einem dünnwandigen Rohr 320, das aus einem amagnetischen (nicht-magnetischen) Material besteht, beispielsweise aus einem austenitischen Stahl, aus Glas, aus Keramik, aus Kunststoff, einem geeigneten Hartmetall oder aus einem Verbundwerkstoff.

Das dünnwandige Rohr 320 hat mehrere Funktionen. Es dient einerseits als Führungshülse der Durchlaufspulenanordnung und hat hierzu einen Innendurchmesser, der nur geringfügig größer ist als der Außendurchmesser des hindurch zu führenden Metalldrahtes. Die Passung ist vorzugsweise so zu wählen, dass ein im Wesentlichen allseitig spielfreies Hindurchgleiten des Prüfgegenstandes durch die Hülse möglich ist. Ein eventueller Luftspalt zwischen der Oberfläche des Prüfgegenstandes und der Rohrinnenseite kann beispielsweise im Bereich bis maximal 30 µm bis 50 µm oder maximal 60 µm oder maximal 80 µm liegen und je nach Oberflächeneigenschaften des Prüfgegenstandes gewählt sein. Das Material der Führungshülse sollte im Hinblick auf große Standzeiten der Durchlaufspulenanordnung auch nach Verschleißgesichtspunkten ausgewählt sein und möglichst verschleißresistent gegenüber dem Material des durchzuführenden Prüfgegenstandes sein. Eine weitere Funktion besteht darin, dass durch das amagnetische Material des Rohres 320 sichergestellt ist, dass ein hindurchgeführter ferromagnetischer Gegenstand nicht an magnetischen oder magnetisierten Teilen der Durchlaufspulenanordnung haften bzw. "magnetisch kleben" bleibt. Das Rohr bildet also einen magnetischen Isolator zwischen Prüfling und Prüfeinrichtung.

Um trotz der magnetischen Trennung eine Messung mit großem Füllfaktor zu ermöglichen, sollte die Wandstärke des Rohres sehr gering sein. Sie kann z.B. weniger als 0,25 mm betragen und insbesondere im Bereich von 0.1 mm bis 0.2 mm liegen.

Je nach Wanddicke des Rohres 320 können bei der Prüfung sehr große Füllfaktoren, z.B. von mehr als 70% erreicht werden. Insbesondere kann der Füllfaktor im Bereich zwischen ca. 75% und ca. 95% liegen. Relative problemlos können beispielsweise Füllfaktoren zwischen ca. 70% und ca. 80 % erreicht werden

Auf beiden Seiten der Messwickel sind stärkere Tragrohre 322 aus einem magnetisch leitenden Material, beispielsweise einem geeigneten Stahlwerkstoff, auf die Führungshülse 320 so aufgeschoben, dass zwischen den den Messwickeln zugewandten Stirnflächen der Tragrohre und den Messwickeln nur ein geringer Luftspalt verbleibt. Zur gegenseitigen Fixierung dieser Elemente und zum Schutz der empfindlichen Messwickel, des zu den Messwickeln führenden Verbindungskabels und der den Messwickeln zugewandten Enden der Tragrohre 322 sind diese Elemente mit einer Kunstharzumhüllung 324 umschlossen und dadurch mechanisch stabilisiert und gleichzeitig gegen Beschädigung geschützt. Diese Baueinheit aus gegeneinander fixierten Elementen bildet die Grundeinheit der Durchlaufspulenanordnung und ist bereits voll funktionsfähig.

Zur weiteren Verbesserung der Funktion sind an beiden Enden der Führungshülse 320 auswechselbare Führungsdüsen 325 angebracht, deren innenseitig polierte Düsenöffnungen 326 koaxial zur Zentralachse der Führungshülse angeordnet sind. Die Führungsdüsen sind auswechselbar in Aluminiumhaltern 328 aufgenommen, die auf die jeweiligen Enden der Stahlrohre 322 aufgeschoben sind. Die Führungsdüsen sind an ihren jeweiligen Außenseiten zur Erleichterung des Einfädelns des Prüfgegenstandes konisch erweitert. Die Düsenelemente können beispielsweise aus Diamantwerkstoff oder Kunststoff bestehen.

Die Gesamtanordnung wird mit einer Gießharzmischung umhüllt, die nach Aushärtung ein luft- und flüssigkeitsdichtes, im Wesentlichen zylindrisches Gehäuse 313 der Durchlaufspulenanordnung bildet, aus dem zu beiden Stirnseiten nur die Düsenhalter mit den darin eingebrachten auswechselbaren, Führungsdüsen und radial das Verbindungskabel 311 herausragen. Die leicht zu montierende, äußerst kompakte und leichte Durchlaufspulenanordnung ist gegen mechanische, thermische und chemische Einflüsse von außen hervorragend geschützt und kann daher fertigungsnah, beispielsweise unmittelbar hinter dem Ausgang eines Ziehsteins einer Drahtziehvorrichtung, über lange Zeiten ohne wesentliche Funktionseinbußen verwendet werden.

Während Fig. 3 eine Durchlaufspulenanordnung ohne Magnetisierungseinrichtung zum Magnetisieren des durchlaufenden Prüfgegenstandes zeigt, sind in den Fig. 4 bis 6 verschiedene Ausführungsformen mit einer solchen Magnetisierungseinrichtung gezeigt. Diese Varianten können insbesondere dann Vorteile bringen, wenn ferromagnetische Prüfmaterialien geprüft werden sollen, bei denen es aufgrund von Permeabilitätsvariationen im Prüfmaterial schwierig oder gar unmöglich sein kann, die von den gesuchten Fehlern herrührenden Fehlersignale von dem durch Permeabilitätsvariationen hervorgerufenen Störsignalen zu separieren. Die Magnetisierungsmittel dienen in diesem Fall zur magnetischen Homogenisierung des Prüfmateriales bzw. zur Reduzierung der Permeabilitätsvariationen im Bereich der Durchlaufspulen, wodurch das Nutzsignal/Störsignal-Verhältnis verbessert werden kann. Bei der Ausführungsformen der Fig. 4 bis 6 tragen diejenigen Bauelemente, die bei der einfacheren Ausführungsform gemäß Fig. 3 identisch oder entsprechend vorhanden sind, entsprechende Bezugszeichen, erhöht um 100 oder ganzzahlige Vielfache davon.

Die Magnetisierungseinrichtung umfasst zwei Permanentmagnete 440, die symmetrisch zu den Messwickeln 412 angeordnet sind und die gleiche Ausrichtung der magnetischen Pole haben, um im Bereich der Messwickel ein Magnetfeld mit im Wesentlichen parallel zur Längsrichtung des Führungsrohrs verlaufenden Magnetflusslinien zu erzeugen. Die richtige Orientierung der Permanentmagnete kann bei der Montage einfach dadurch festgestellt werden, dass sich die auf die Rohre aufgeschobenen Permanentmagnete gegenseitig anziehen müssen. Der axiale Abstand der.Permanentmagnete 440 von den Messwickeln ist mit Hilfe von rohrförmigen Abstandhaltern 445 eingestellt, die auf die Tragrohre 422 aufgeschoben werden, bevor die Permanentmagnete von den Enden her aufgeschoben werden. Nach Aufschieben der Distanzstücke und der Permanentmagnete werden dann in bereits beschriebener Weise die Halter für die Führungsdüsen endseitig aufgesetzt, bevor das Ganze zur Bildung des Gehäuses 413 mit Gießharz umgossen wird. Die magnetisch leitenden Tragrohre 422 dienen hier auch als Magnetflussleiter.

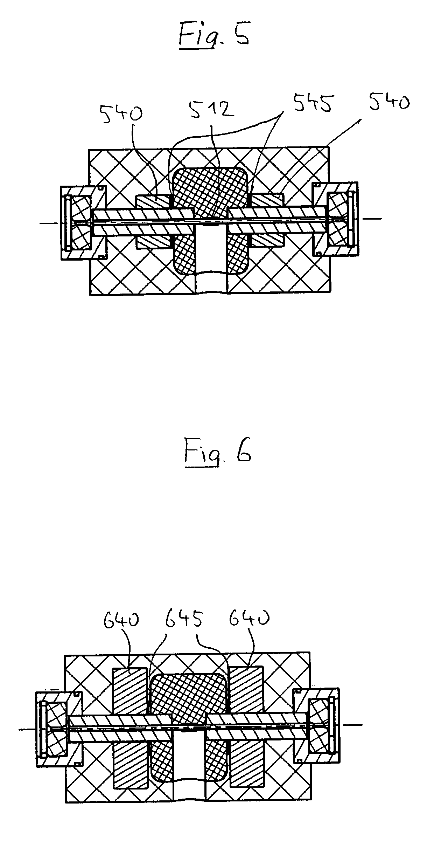

Soll bei gleich dimensionierten Permanentmagneten am Ort der Messwickel ein stärkeres Magnetisierungs-Magnetfeld vorliegen, so können die Permanentmagnete näher an die Messwickel herangerückt werden. Fig. 5 zeigt hierzu ein Ausführungsbeispiel, bei dem anstelle der rohrförmigen Distanzstücke nur schmale Passscheiben 545 zwischen gelegt sind, so dass der axiale Abstand der Permanentmagnete zu den Messwickeln geringer ist als bei der Ausführungsform gemäß Fig. 4.

Eine weitere Variation der Magnetfeldstärke am Ort der Messwickel ist beispielsweise dadurch möglich, dass anstelle der relativ kleinen Permanentmagnete der Ausführungsformen von Fig. 4 und Fig. 5 stärkere Permanentmagnete verwenden werden. Fig. 6 zeigt hierzu beispielhaft zwei Permanentmagnete 640 mit größerem Volumen des Magnetmaterials, die unter Zwischenlage von Distanzscheiben 645 nahe an die Messwickel herangerückt sind.

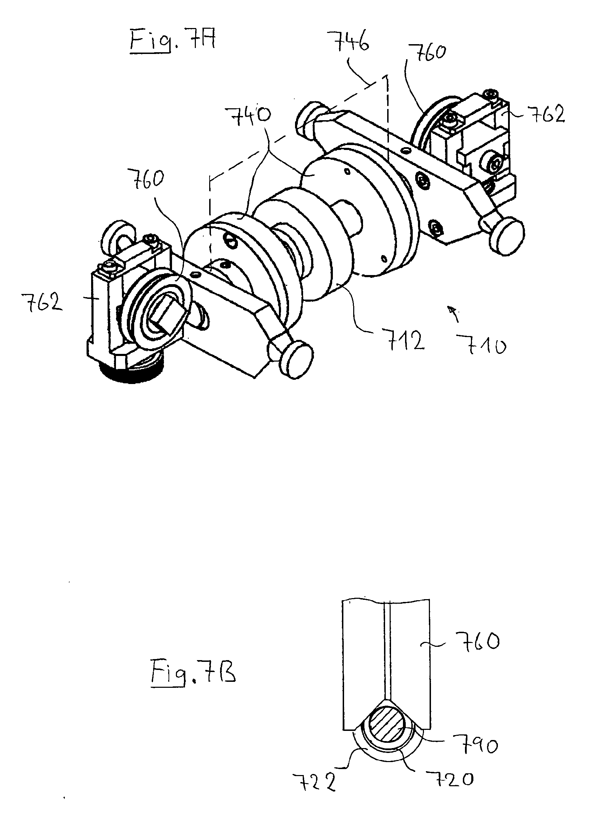

Anhand von Fig. 7A und 7B wird nun eine Ausführungsform erläutert, die vor allem für die Prüfung von etwas dickeren Drähten ab ca. 2 bis 3 mm Durchmesser oder auch für die Prüfung von entsprechend dimensionierten Stäben oder Rohren ausgelegt ist. Es können z.B. Durchmesser bis in den Bereich von 15 mm bis 20 mm abgedeckt werden. Generell werden die Komponenten der Durchlaufspulenanordnung in der Regel größer und schwerer, je größer der Durchmesser des zu prüfenden Gegenstandes ist. Andererseits werden die zu prüfenden Gegenstände in der Regel vor und hinter dem Ort der Prüfvorrichtung geführt und können bei ausreichendem Materialquerschnitt zwischen den Führungen ausreichend tragfähig sein, um auch schwerere Durchlaufspulenanordnungen zu tragen. Die Durchlaufspulenanordnung 710 umfasst ein in Fig. 7B in axialer Ansicht gezeigtes innen liegendes Rohr 720 aus einem amagnetischen Werkstoff, welches im Unterschied zu den Führungshülsen der vorigen Ausführungsformen einen Innendurchmesser hat, der deutlich größer sein kann als der Außendurchmesser des Prüfgegenstandes, so dass eine Berührung des Prüfgegenstandes durch die Rohrinnenseite bei der Prüfung vermieden wird. Auf das Rohr sind analog zu den obigen Ausführungsformen Tragrohre 722 aus magnetisch leitendem Material aufgeschoben. Auf dem inneren Rohr 720 sitzen zentrisch die Messwickel der Durchlaufspulen 712. Zu beiden Seiten der Messwickel sind in einem Abstand zu diesen zwei Magnetisierungsmagnete 740 einer Magnetisierungseinrichtung auf die äußeren Rohre 722 aufgeschoben und mittels Schrauben an ihren Axialpositionen befestigt.

Die Durchlaufspulenanordnung hat, ähnlich wie die Durchlaufspulenanordnungen der Fig. 3 bis 6, eine Rohranordnung mit einem inneren Rohr 720 und mindestens einem das innere Rohr umschließenden äußeren Rohr 722, wobei das innere Rohr 720 im Wesentlichen aus einem amagnetischen (nicht-magnetischen) Werkstoff und das äußere Rohr 722 im Wesentlichen aus einem magnetisch leitenden Werkstoff besteht und damit als Teil der Magnetisierungsmittel dienen kann. Die Durchlaufspule umschließt das innere Rohr in einem Bereich ohne äußeres Rohr und an beiden Seiten der Durchlaufspule ist ein Teil des äußeren Rohres angeordnet. Während das innere Rohr bei den Durchlaufspulenanordnungen der Fig. 3 bis 6 als Führungshülse dient und auf dem geprüften Gegenstand abgleitet, ist bei der Variante von Fig. 7 normalerweise kein Berührungskontakt zum Gegenstand vorgesehen und die Führung wird über eine Rollenanordnungen sichergestellt.

An der Durchlaufspulenanordnung sind an beiden axialen Enden Rollenträger 762 befestigt, die Führungsrollen 760 tragen, welche an den jeweiligen Rollenträgern um senkrecht zur Durchlaufrichtung ausgerichtete, im Betrieb weitgehend horizontale Drehachsen drehbar gelagert sind. Die Rollenträger sind auf gegenüberliegenden Seiten der Längsachse der Anordnung bzw. eines hindurch geführten Prüfgegenstandes etwa drehsymmetrisch zu dem im Bereich der Messwickel liegenden Masseschwerpunkt der Gesamtanordnung angeordnet, so dass sich eine gewichtsmäßig ausgeglichene Verteilung ergibt. Die zumindest in ihrem Umfangsbereich aus Bronze oder einem anderen amagnetischen und vorzugsweise verschleissfesten Material (z.B. Kunststoff, Vulkollan ® etc) bestehende Führungsrollen 760 haben an ihrem Umfang eine konkave, im Wesentlichen V-förmige Führungskontur, die dafür sorgt, dass sich die Führungsrollen auf dem hindurch geführten Prüfgegenstand in seitlicher Richtung selbst zentrieren, wenn die Gesamtanordnung am Prüfgegenstand aufgehängt ist. Fig. 7B zeigt diese Situation, in der eine Führungsrolle 760 zentrisch auf einem in Durchlaufrichtung (senkrecht zur Papierebene) durchgeführten Prüfgegenstand 790 aufsitzt. Die Führungsrollen sind dabei so dimensioniert und angeordnet, dass die Zentralachse des Prüfungsgegenstandes dann mittig durch das innere Rohr 720 der Durchlaufspulenanordnung verläuft, ohne das innere Rohr zu berühren. Alle Komponenten der Rollenanordnung sollten nach Möglichkeit aus amagnetischen Werkstoffen gefertigt sein, um einen negativen Einfluss der Rollenanordnung auf die Magnetfeldverteilung im Bereich der Messwickel zu vermeiden.

Eine besonders wirksame Magnetisierung des Prüfgegenstandes kann bei dieser Ausführungsform dadurch erreicht werden, dass die Magnetisierungseinrichtung eine magnetisch leitende Einrichtung 746 zum Schließen von magnetischen Feldlinien außerhalb der Durchlaufspulenanordnung umfassen. Diese Einrichtung ist im Beispielsfall von Fig. 7A als ein nur schematisch gestrichelt dargestellter Feldbügel 746 aus magnetisch leitendem Material ausgestaltet. Dieser Feldbügel kann permanent fest mit der Durchlaufspulenanordnung verbunden sein, ist jedoch bei der gezeigten Ausführungsform als bei Bedarf abnehmbarer Feldbügel ausgestaltet, der ohne Zuhilfenahme von Werkzeugen angebracht bzw. von der Durchlaufspulenanordnung abgenommen werden kann.

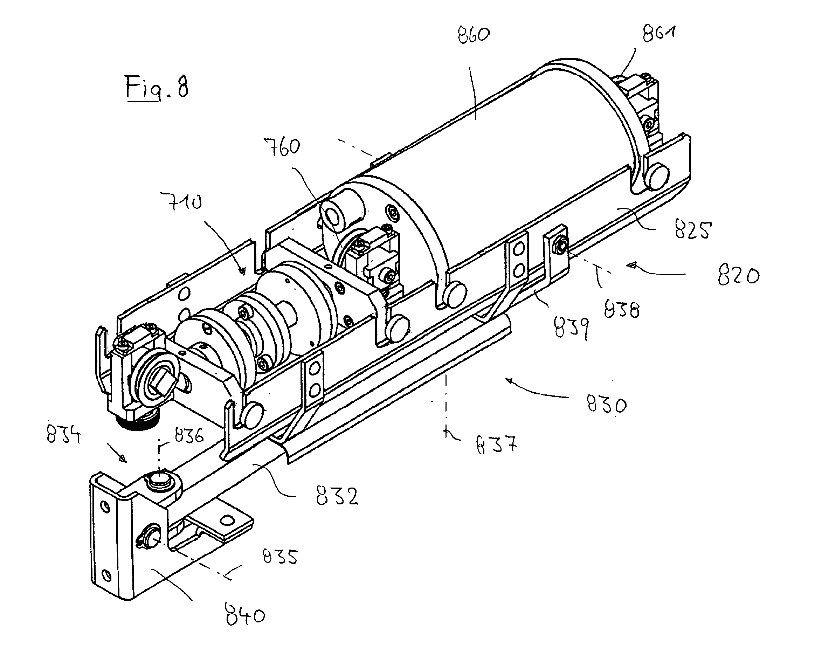

Fig. 8 zeigt die in Fig. 7 gezeigte Durchlaufspulenanordnung 710 in einem betriebsfertig montierten Zustand, bei dem die Durchlaufspulenanordnung in eine Halteeinrichtung 820 eingesetzt ist, die es im Betrieb der Prüfvorrichtung erlaubt, dass die Durchlaufspulenanordnung eventuellen Querbewegungen des durchlaufenden Prüfgegenstandes unter Beibehaltung der Zentrierung des Prüfgegenstandes in der Durchlaufspulenanordnung folgen kann. Die Halteeinrichtung umfasst einen nach oben geöffneten, schiffchenförmigen Spulenhalter 825, der an seinen nach oben ragenden Seitenwänden L-förmige Einschnitte hat, in die die Durchlaufspulenanordnung mit Hilfe von nach außen ragenden Zapfen eingehängt werden kann. Die Halteeinrichtung hat weiterhin ein im Wesentlichen winkelförmiges Basiselement 840, welches eine Befestigung der Halteeinrichtung an einem maschinenfesten Teil der Prüfvorrichtung erlaubt. Im Beispielsfall sind an der vertikalen Vorderseite des Basiselements Durchgangsbohrungen für Halteschrauben vorgesehen, mit denen die Halteeinrichtung direkt am Ziehsteinhalter einer Drahtziehvorrichtung festgeschraubt werden kann. Das Basiselement kann mit Hilfe des horizontalen Teils des Winkels auch an der Oberseite eines anderen maschinenfesten Bauteils befestigt werden.

Das Basiselement 840 und der Spulenhalter 825 sind über eine in sich bewegliche Verbindungseinrichtung 830 verbunden. Diese umfasst einen Schwenkarm 832, der über eine Gelenkanordnung 834 mit zwei senkrecht zueinander ausgerichteten Schwenkachsen mit dem Basiselement 840 verbunden ist. Eine horizontale erste Schwenkachse 835 erlaubt eine Schwenkbewegung des Schwenkarms in vertikaler Richtung, während eine vertikale zweite Schwenkachse 836 eine zusätzliche seitliche Verschwenkung erlaubt. An dem dem Spulenhalter zugewandten Ende des Schwenkarms ist eine zweite Gelenkanordnung angebracht, die ebenfalls zwei senkrecht zueinander ausgerichtete Schwenkachsen umfasst. Ein im Wesentlichen U-förmiger, nach oben geöffneter Haltebügel 839 ist über ein Drehgelenk mit dem Schwenkarm derart verbunden, dass die Schwenkachse 837 dieses Gelenks senkrecht zur Längsachse des Schwenkhebels 832 verläuft. Zwischen den Armen des Haltebügels ist der Spulenhalter 825 schwenkbar gelagert, wobei die zugehörige Schwenkachse 838 senkrecht zur Schwenkachse 837 verläuft. Aufgrund der beiden Gelenkanordnungen ist es möglich, den mit dem Basiselement verbundenen Spulenhalter sowohl in vertikaler Richtung als auch in seitlicher Richtung, also in allen Querrichtungen zur Durchlaufrichtung, unter Beibehaltung einer im Wesentlichen horizontalen Ausrichtung der Durchlaufachse zu bewegen. Dies erleichtert einerseits die Montage der Anordnung und das Einfädeln eines Prüfgegenstandes. Außerdem wird dadurch erreicht, dass die Prüfanordnung eventuellen Querbewegungen des durchlaufenden Prüfgegenstandes unter Beibehaltung der Zentrierung des Prüfgegenstandes in der Durchlaufspulenanordnung folgen kann. Die Halteeinrichtung hält darüber hinaus die Durchlaufspulenanordnung auch dann in der Nähe des Durchlaufbereiches, wenn ein Prüfling z.B. abreißt oder das Ende eines langen Prüflings durch die Durchlaufspulenanordnung hindurchgelaufen ist. Sie wirkt also auch als Sicherung gegen Herabfallen.

Eine Besonderheit der Ausführungsform in Fig. 8 besteht darin, dass an dem Spulenhalter 825 in Durchlaufrichtung hinter der Durchlaufspulenanordnung 710 eine Entmagnetisierungseinrichtung 860 in Form eines großen Permanentmagneten oder eines Elektromagneten angeordnet ist. Auch an der Entmagnetisierungseinrichtung sind nach außen ragende Zapfen vorgesehen, mit deren Hilfe die Entmagnetisierungseinrichtung formschlüssig in den Spulenhalter von oben eingebaut werden kann. Die austrittsseitige Führungsrolle 760 der Durchlaufspulenanordnung bildet gleichzeitig die eintrittsseitige Führungsrolle der Entmagnetisierungseinrichtung, an deren Austrittsseite sich eine weitere Führungsrolle 861 befindet, um eine zentrische Führung des geprüften und noch aufmagnetisierenden Prüfgegenstandes durch die Entmagnetisierungseinrichtung zu gewährleisten.

## Patentansprüche

1. Prüfverfahren zur Prüfung von langgestreckten Gegenständen, bei dem ein langgestreckter Gegenstand (190) entlang einer Durchlaufrichtung (195) durch eine Durchlaufspulenanordnung (110, 710) mit mindestens einer Durchlaufspule (412, 512, 712) hindurch bewegt wird, wobei die Durchlaufspulenanordnung quer zur Durchlaufrichtung des Gegenstandes beweglich gehalten und an dem durchlaufenden Gegenstand derart geführt wird, dass die Durchlaufspulenanordnung quer zur Durchlaufrichtung des Gegenstandes verlaufenden Transversalbewegungen des Gegenstandes folgen kann,
**dadurch gekennzeichnet, dass** der durch die Durchlaufspulenanordnung hindurch laufende Gegenstand durch eine mit der Durchlaufspulenanordnung bewegliche Magnetisierungseinrichtung magnetisiert wird.

2. Prüfverfahren nach Anspruch 1, worin der Gegenstand durch in Durchlaufrichtung vor der Durchlaufspulenanordnung und in Durchlaufrichtung hinter der Durchlaufspulenanordnung angeordnete Magnetisierungsmittel, insbesondere Permanentmagnete (440, 640, 740), magnetisiert wird.

3. Prüfverfahren nach Anspruch 1 oder 2, worin die Durchlaufspulenanordnung unmittelbar am durchlaufenden Gegenstand geführt wird, wobei vorzugsweise ein ständiger Berührungskontakt zwischen dem durchlaufenden Gegenstand und einem oder mehreren Führungselementen (760) einer der Durchlaufspulenanordnung zugeordneten Führungseinrichtung besteht, worin der Berührungskontakt insbesondere einen gleitenden Berührungskontakt und/oder einen Abrollkontakt umfasst.

4. Prüfverfahren nach Anspruch 1 oder 2, worin die Durchlaufspulenanordnung berührungslos am durchlaufenden Gegenstand geführt wird, wobei insbesondere eine aktuelle Position des durchlaufenden Gegenstandes in Durchlaufrichtung vor der Durchlaufspulenanordnung mit Hilfe mindestens eines Positionssensors zur Erzeugung von Positionssignalen erfasst und ein Verlagerungsantrieb zur Verlagerung der Durchlaufspulenanordnung quer zur Durchlaufrichtung des Gegenstandes auf Basis der Positionssignale gesteuert wird, vorzugsweise derart, dass die Durchlaufspulenanordnung mit Hilfe des Verlagerungsantriebs dynamisch in Prüfpositionen verlagert wird, in denen der durchlaufende Gegenstand im Wesentlichen zentrisch durch die Durchlaufspulenanordnung verläuft, wobei für die Erfassung der Position des Gegenstandes insbesondere ein optischer und/oder ein magnetischer Positionssensor verwendet wird.

5. Prüfverfahren nach einem der vorhergehenden Ansprüche, worin die Prüfung mit einem Füllfaktor von mehr als 70 %, insbesondere mit einem Füllfaktor zwischen 75 % und 95 % durchgeführt wird, wobei der Füllfaktor das Verhältnis zwischen dem Querschnitt des geprüften Gegenstands (190) und einem wirksamen Querschnitt der Durchlaufspule ist.

6. Prüfvorrichtung zum Prüfen von langgestreckten Gegenständen im Durchlaufverfahren mit:
einer Durchlaufspulenanordnung (110, 410, 510, 610, 710) mit mindestens einer Durchlaufspule (112, 412, 712) zum Hindurchführen eines langgestreckten Gegenstandes entlang einer Durchlaufrichtung (195);
einer Halteeinrichtung (120, 820) zum Halten der Durchlaufspulenanordnung in einer Prüfposition, wobei die Halteeinrichtung Bewegungen der Durchlaufspulenanordnung quer zur Durchlaufrichtung (195) erlaubt; sowie
einer Führungseinrichtung zum Einstellen der Lage der Prüfposition der Durchlaufspulenanordnung in Abhängigkeit von der Lage des durch die Durchlaufspulenanordnung laufenden Gegenstandes (190),
**dadurch gekennzeichnet, dass** eine mit der Durchlaufspulenanordnung bewegliche Magnetisierungseinrichtung zum Magnetisieren des durch die Durchlaufspulenanordnung hindurch laufenden Gegenstandes vorgesehen ist.

7. Prüfvorrichtung nach Anspruch 6, worin die Magnetisierungseinrichtung in Durchlaufrichtung vor und in Durchlaufrichtung hinter einer Durchlaufspule (412, 712) der Durchlaufspulenanordnung Magnetisierungsmittel aufweist, insbesondere mit Permanentmagneten (440, 640, 740).

8. Prüfvorrichtung nach einem der Ansprüche 6 oder 7, worin die Durchlaufspulenanordnung eine Rohranordnung mit einem inneren Rohr (320, 720) und einem das innere Rohr umschließenden äußeren Rohr (322, 722) aufweist, wobei das innere Rohr im Wesentlichen aus einem amagnetischen Werkstoff und das äußere Rohr im Wesentlichen aus einem magnetisch leitenden Werkstoff besteht, worin vorzugsweise die Durchlaufspule (312) das innere Rohr (320) in einem Bereich ohne äußeres Rohr umschließt und an beiden Seiten der Durchlaufspule ein Teil des äußeren Rohres (322) angeordnet ist.

9. Prüfvorrichtung nach Anspruch 6, 7 oder 8, worin die Magnetisierungseinrichtung eine magnetisch leitende Einrichtung (740) zum Schließen von magnetischen Feldlinien außerhalb der Durchlaufspulenanordnung (710) umfasst.

10. Prüfvorrichtung nach einem der Ansprüche 6 bis 9, worin eine in Durchlaufrichtung hinter der Durchlaufspulenanordnung (710) angeordnete Entmagnetisierungseinrichtung (860) vorgesehen ist, die vorzugsweise relativ zur Durchlaufspulenanordnung derart fixierbar oder fixiert ist, dass sie sich mit der dem Prüfgegenstand folgenden Durchlaufspulenanordnung mitbewegt, wobei insbesondere die Halteeinrichtung (825) zum Halten der Durchlaufspulenanordnung Haltestrukturen zur Aufnahme der Entmagnetisierungseinrichtung aufweist.

11. Prüfvorrichtung nach einem der Ansprüche 6 bis 10, worin die Halteeinrichtung einen Spulenhalter (125, 825) zum Befestigen der Durchlaufspulenanordnung und ein Basiselement (140, 840) zur Befestigung an einem fest mit einer Maschinenbasis der Prüfvorrichtung verbundenen Bauteil aufweist, wobei der Spulenhalter mit dem Basiselement über eine bewegliche Verbindungseinrichtung (130, 830) derart verbunden ist, dass der Spulenhalter gegenüber dem Basiselement mindestens in zwei quer zur Durchlaufrichtung (195) verlaufenden Raumrichtungen beweglich ist.

12. Prüfvorrichtung nach Anspruch 11, worin die Verbindungseinrichtung mindestens zwei Schwenkgelenke mit senkrecht zueinander ausgerichteten Schwenkachsen (835, 836, 837, 838) aufweist, wobei vorzugsweise zwei Paare von Schwenkgelenken mit jeweils senkrecht zueinander ausgerichteten Schwenkachsen vorgesehen sind, oder worin die Verbindungseinrichtung mindestens ein biegsames Verbindungselement aufweist, welches den Spulenhalter mit dem Basiselement verbindet, wobei das Basiselement (140) vorzugsweise über einen Verbindungsdraht (130) mit dem Spulenhalter (125) verbunden ist.

13. Prüfvorrichtung nach einem der Ansprüche 6 bis 12, worin die Führungseinrichtung mindestens eine Führungshülse (320) zum Hindurchführen des zu prüfenden Gegenstandes aufweist, wobei ein wirksamer Innenquerschnitt der Führungshülse zum spielfreien Abgleiten auf dem Gegenstand ausgelegt ist, wobei vorzugsweise ein Luftspalt zwischen der Oberfläche des Gegenstandes und einer Innenfläche der Führungshülse maximal 50 µm beträgt, wobei vorzugsweise die Durchlaufspule (312) die Führungshülse umschließt.

14. Prüfvorrichtung nach Anspruch 13, worin die Führungshülse (320) eine Wandstärke von weniger als 0,25 mm hat, wobei die Wandstärke vorzugsweise im Bereich von 0,1 mm bis 0,2 mm liegt und/oder worin die Führungshülse (320) aus einem amagnetischen Material besteht, insbesondere aus einem amagnetischen Stahlwerkstoff, aus einer Keramik, aus Glas, aus Kunststoff, oder aus einem Verbundwerkstoff.

15. Prüfvorrichtung nach einem der Ansprüche 9 bis 14, worin die Führungseinrichtung eine Rollenanordnung aufweist, die mindestens eine Führungsrolle (760) zum Abrollen an dem durch die Durchlaufspulenanordnung (710) bewegten Gegenstand hat, wobei vorzugsweise die Rollenanordnung mindestens eine Führungsrolle (760) in Durchlaufrichtung vor der Durchlaufspulenanordnung (710) und mindestens eine Führungsrolle (760) in Durchlaufrichtung hinter der Durchlaufspulenanordnung hat, so dass die Durchlaufspulenanordnung zwischen Führungsrollen der Rollenanordnung angeordnet ist, und/oder wobei vorzugsweise eine Führungsrolle (760) an ihrem Umfang eine konkave Führungskontur hat, die vorzugsweise im Wesentlichen V-förmig gestaltet ist und/oder worin eine Führungsrolle mindestens im Bereich ihres Umfangs aus einem amagnetischen Material besteht.

## Claims

1. A test method for testing elongated objects, in which an elongated object (190) is moved in a feed-through direction (195) through a feed-through coil arrangement (110, 710) having at least one feed-through coil (412, 512, 712), wherein the feed-through coil arrangement is secured so as to be transversely movable with respect to the feed-through direction of the object and is guided on the object passing through in such a way that the feed-through coil arrangement can follow transverse movements of the object occurring transversely with respect to the feed-through direction of the object,
**characterized in that** the object passing through the feed-through coil arrangement is magnetized by a magnetization device movable together with the feed-through coil arrangement.

2. The test method according to claim 1, wherein the object is magnetized by magnetization means, in particular permanent magnets (440, 640, 740), disposed before the feed-through coil arrangement in the feed-through direction and after the feed-through coil arrangement in the feed-through direction.

3. The test method according to claim 1 or 2, wherein the feed-through coil arrangement is guided directly on the object passing through, wherein continuous physical contact preferably occurs between the object passing through and one or more guide elements (760) of a guide device assigned to the feed-through coil arrangement, wherein the physical contact comprises in particular a sliding physical contact and/or a rolling contact.

4. The test method according to claim 1 or 2, wherein the feed-through coil arrangement is guided in a contactless fashion on the object passing through, wherein in particular a current position of the object passing through is detected before the feed-through coil arrangement in the feed-through direction using at least one position sensor for generating position signals, and a displacement drive for displacing the feed-through coil arrangement transversely with respect to the feed-through direction of the object on the basis of the position signals is controlled, preferably in such a way that the feed-through coil arrangement is displaced dynamically using the displacement drive into test positions in which the object passing through extends essentially centrally through the feed-through coil arrangement, wherein an optical and/or a magnetic position sensor are/is used for sensing the position of the object.

5. The test method according to any one of the preceding claims, wherein the testing is carried out with a fill factor of more than 70 %, in particular with a fill factor between 75 % and 95 %, wherein the fill factor is the ratio between the cross section of the object (190) to be tested and an effective cross section of the feed-through coil.

6. A test apparatus for testing elongated objects using a feed-through method with:
a feed-through coil arrangement (110, 410, 510, 610, 710) with at least one feed-through coil (112, 412, 712) for feeding through an elongated object in a feed-through direction (195),
a securing device (120, 820) for securing the feed-through coil arrangement in a test position, wherein the securing device permits movements of the feed-through coil arrangement transversely with respect to the feed-through direction (195), and
a guide device for adjusting the location of the test position of the feed-through coil arrangement as a function of the location of the object (190) passing through the feed-through coil arrangement,
**characterized in that** a magnetization device, which can move with the feed-through coil arrangement, is provided for magnetizing the object passing through the feed-through coil arrangement.

7. The test apparatus according to claim 6, wherein the magnetization device has magnetization means, in particular with permanent magnets (440, 640, 740), before a feed-through coil in the feed-through direction and after a feed-through coil (412, 712) in the feed-through direction, of the feed-through coil arrangement.

8. The test apparatus according to claim 6 or 7, wherein the feed-through coil arrangement has a tube arrangement with an inner tube (320, 720) and an outer tube (322, 722) surrounding the inner tube, wherein the inner tube is composed essentially of a nonmagnetic material, and the outer tube is composed essentially of a magnetically conductive material, wherein preferably the feed-through coil (312) encloses the inner tube (320) in a region without an outer tube, and part of the outer tube (322) is arranged on both sides of the feed-through coil.

9. The test apparatus according to claim 6, 7 or 8, wherein the magnetization device comprises a magnetically conductive device (740) for closing magnetic field lines outside the feed-through coil arrangement (710).

10. The test apparatus according to any one of claims 6 to 9, wherein a demagnetization device (860), which is arranged after the feed-through coil arrangement (710) in the feed-through direction, is provided and preferably can be fixed or is fixed relative to the feed-through coil arrangement in such a way that said demagnetization device (860) moves along with the feed-through coil arrangement following the test specimen, wherein in particular the securing device (825) for securing the feed-through coil arrangement has securing structures for holding a demagnetization device.

11. The test apparatus according to any one of claims 6 to 10, wherein the securing device has a coil holder (125, 825) for attaching the feed-through coil arrangement and a base element (140, 840) for attachment to a component which is permanently connected to a machine base of the test apparatus, wherein the coil holder is connected to the base element via a movable connecting device (130, 830) in such a way that the coil holder can move, with respect to the base element, in at least two spatial directions extending transversely with respect to the feed-through direction (195).

12. The test apparatus according to claim 11, wherein the connecting device has at least two pivot joints with pivoting axes (835, 836, 837, 838) which are oriented perpendicularly with respect to one another, wherein two pairs of pivot joints with pivoting axes which are respectively oriented perpendicularly with respect to one another are preferably provided, or wherein the connecting device has at least one flexible connecting element which connects the coil holder to the base element, wherein the base element (140) is preferably connected to the coil holder (125) via a connecting wire (130).

13. The test apparatus according to any one of claims 6 to 12, wherein the guide device has at least one guide sleeve (320) for guiding through the object to be tested, wherein an effective internal cross section of the guide sleeve is configured for playfree sliding on the test specimen, wherein preferably an air gap between the surface of the object and an inner face of the guide sleeve is at maximum 50 µm, wherein the feed-through coil (312) preferably encloses the guide sleeve.

14. The test apparatus according to claim 13, wherein the guide sleeve (320) has a wall thickness of less than 0.25 mm, wherein the wall thickness is preferably in the range from 0.1 mm to 0.2 mm, and/or wherein the guide sleeve (320) is composed of a nonmagnetic material, in particular of a nonmagnetic steel material, of a ceramic, of glass, of plastic or of a composite material.

15. The test apparatus according to any one of claims 9 to 14, wherein the guide device has a roller arrangement which has at least one guide roller (760) for rolling on the object which is moved through the feed-through coil arrangement (710), wherein preferably the roller arrangement has at least one guide roller (760) before the feed-through coil arrangement (710) in the feed-through direction and at least one guide roller (760) after the feed-through coil arrangement in the feed-through direction, so that the feed-through coil arrangement is arranged between guide rollers of the roller arrangement, and/or wherein preferably a guide roller (760) has, on its circumference, a concave guide contour which is preferably configured essentially in a V shape and/or wherein a guide roller is composed of a nonmagnetic material at least in the region of its circumference.

## Revendications

1. Procédé de contrôle pour contrôler des objets allongés, selon lequel un objet allongé (190) est déplacé le long d'un sens de passage (195) à travers un arrangement de bobines de passage (110, 710) comprenant au moins une bobine de passage (412, 512, 712), l'arrangement de bobines de passage étant maintenu mobile transversalement au sens de passage de l'objet et étant guidé contre l'objet passant de telle sorte que l'arrangement de bobines de passage peut suivre les mouvements transversaux de l'objet qui se déroulent transversalement par rapport au sens de passage de l'objet,
**caractérisé en ce que** l'objet qui traverse l'arrangement de bobines de passage est magnétisé par un dispositif de magnétisation pouvant se déplacer avec l'arrangement de bobines de passage.

2. Procédé de contrôle selon la revendication 1, selon lequel l'objet est magnétisé par des moyens de magnétisation, notamment des aimants permanents (440, 640, 740), disposés devant l'arrangement de bobines de passage dans le sens du passage et derrière l'arrangement de bobines de passage dans le sens du passage.

3. Procédé de contrôle selon la revendication 1 ou 2, selon lequel l'arrangement de bobines de passage est guidé directement contre l'objet passant, un contact physique constant étant de préférence produit entre l'objet passant et un ou plusieurs éléments de guidage (760) d'un dispositif de guidage associé à l'arrangement de bobines de passage, le contact physique comprenant notamment un contact physique glissant et/ou un contact déroulant.

4. Procédé de contrôle selon la revendication 1 ou 2, selon lequel l'arrangement de bobines de passage est guidé sans contact contre l'objet passant, une position actuelle de l'objet passant dans le sens du passage avant l'arrangement de bobines de passage étant notamment détectée à l'aide d'au moins un détecteur de position en vue de générer des signaux de position et un mécanisme d'entraînement de déplacement destiné au déplacement de l'arrangement de bobines de passage étant commandé transversalement par rapport au sens de passage de l'objet en se basant sur les signaux de position, de préférence de telle sorte que l'arrangement de bobines de passage est déplacé dynamiquement à l'aide du mécanisme d'entraînement de déplacement dans des positions de contrôle dans lesquelles l'objet passant défile sensiblement au centre à travers l'arrangement de bobines de passage, un détecteur de position optique et/ou magnétique étant notamment utilisé pour la détection de la position de l'objet.

5. Procédé de contrôle selon l'une des revendications précédentes, selon lequel le contrôle est effectué avec un facteur de remplissage supérieur à 70 %, notamment avec un facteur de remplissage compris entre 75 % et 95 %, le facteur de remplissage étant le rapport entre la section transversale de l'objet contrôlé (190) et une section transversale efficace de la bobine de passage.

6. Système de contrôle pour contrôler des objets allongés au cours d'un procédé de passage, comprenant :
un arrangement' de bobines de passage (110, 410, 510, 610, 710) comprenant au moins une bobine de passage (112, 412, 712) destiné à être traversé par un objet allongé le long d'un sens de passage (195) ;
un dispositif de maintien (120, 820) destiné à maintenir l'arrangement de bobines de passage dans une position de contrôle, le dispositif de maintien autorisant les mouvements de l'arrangement de bobines de passage transversalement au sens de passage (195) ; et
un dispositif de guidage destiné à régler l'emplacement de la position de contrôle de l'arrangement de bobines de passage en fonction de l'emplacement de l'objet (190) qui défile à travers l'arrangement de bobines de passage,
**caractérisé en ce qu'**il est prévu un dispositif de magnétisation pouvant se déplacer avec l'arrangement de bobines de passage destiné à magnétiser l'objet qui défile à travers l'arrangement de bobines de passage.

7. Système de contrôle selon la revendication 6, avec lequel le dispositif de magnétisation possède des moyens de magnétisation devant et derrière une bobine de passage (412, 712) de l'arrangement de bobines de passage dans le sens du passage, notamment avec des aimants permanents (440, 640, 740).

8. Système de contrôle selon l'une des revendications 6 ou 7, avec lequel l'arrangement de bobines de passage possède un arrangement de tubes muni d'un tube interne (320, 720) et d'un tube externe (322, 722) qui entoure le tube interne, le tube interne étant pour l'essentiel constitué d'un matériau amagnétique et le tube externe pour l'essentiel d'un matériau magnétiquement conducteur, la bobine de passage (312) entourant de préférence le tube interne (320) dans une zone dépourvue du tube externe et une partie du tube externe (322) étant disposée des deux côtés de la bobine de passage.

9. Système de contrôle selon la revendication 6, 7 ou 8, avec lequel le dispositif de magnétisation comprend un dispositif magnétiquement conducteur (740) destiné à fermer les lignes de champ magnétique en-dehors de l'arrangement de bobines de passage (710).

10. Système de contrôle selon l'une des revendications 6 à 9, avec lequel il est prévu un dispositif de démagnétisation (860) disposé derrière l'arrangement de bobines de passage (710) dans le sens du passage, lequel peut être fixé ou est fixé par rapport à l'arrangement de bobines de passage de préférence de telle sorte qu'il se déplace en même temps que l'arrangement de bobines de passage qui suit l'objet à contrôler, le dispositif de maintien (825), pour le maintien de l'arrangement de bobines de passage, possédant notamment des structures de maintien destinées à accueillir le dispositif de démagnétisation.

11. Système de contrôle selon l'une des revendications 6 à 10, avec lequel le dispositif de maintien possède un porte-bobine (125, 825) destiné à la fixation de l'arrangement de bobines de passage et un élément de base (140, 840) destiné à être fixé à un composant relié à demeure à une base de machine du système de contrôle, le porte-bobine étant relié avec l'élément de base par le biais d'un dispositif de liaison mobile (130, 830) de telle sorte que le porte-bobine est mobile par rapport à l'élément de base au moins dans deux directions spatiales transversales par rapport au sens de passage (195).

12. Système de contrôle selon la revendication 11, avec lequel le dispositif de liaison possède au moins deux articulations de pivotement ayant des axes de pivotement (835, 836, 837, 838) orientés perpendiculairement les uns par rapport aux autres, deux paires d'articulations de pivotement ayant respectivement des axes de pivotement orientés perpendiculairement les uns par rapport aux autres étant de préférence prévues, ou avec lequel le dispositif de liaison possède au moins un élément de liaison flexible qui relie le porte-bobine avec l'élément de base, l'élément de base (140) étant de préférence relié au porte-bobine (125) par le biais d'un fil métallique de liaison (130).

13. Système de contrôle selon l'une des revendications 6 à 12, avec lequel le dispositif de guidage possède au moins une douille de guidage (320) à travers laquelle peut passer l'objet à contrôler, une section transversale intérieure efficace de la douille de guidage étant conçue pour glisser sans jeu sur l'objet, un interstice entre la surface de l'objet et une surface intérieure de la douille de guidage étant de préférence égal au maximum à 50 µm, la bobine de passage (312) entourant de préférence la douille de guidage.

14. Système de contrôle selon la revendication 13, avec lequel la douille de guidage (320) possède une épaisseur de paroi inférieure à 0,25 mm, l'épaisseur de paroi étant de préférence comprise dans la plage de 0,1 mm à 0,2 mm et/ou avec lequel la douille de guidage (320) se compose d'un matériau amagnétique, notamment d'un acier amagnétique, d'une céramique, de verre, de matière plastique ou d'un matériau composite.

15. Système de contrôle selon l'une des revendications 9 à 14, avec lequel le dispositif de guidage possède un arrangement de galets qui comprend au moins un galet de guidage (760) destiné à rouler sur l'objet déplacé à travers l'arrangement de bobines de passage (710), l'arrangement de galets comprenant de préférence au moins un galet de guidage (760) devant l'arrangement de bobines de passage (710) dans le sens du passage et au moins un galet de guidage (760) derrière l'arrangement de bobines de passage dans le sens du passage, de sorte que l'arrangement de bobines de passage est disposé entre les galets de guidage de l'arrangement de galets, et/ou un galet de guidage (760) possède sur son pourtour un contour de guidage de préférence concave, lequel est pour l'essentiel configuré en forme de V et/ou le galet de guidage étant constitué au moins dans la zone de son pourtour d'un matériau amagnétique.
